# EUROPÄISCHE PATENTSCHRIFT

(11) **EP 2 218 972 B1**
(45) Veröffentlichungstag und Bekanntmachung des Hinweises auf die Patenterteilung: **14.03.2018**
(21) Anmeldenummer: 10000680.8
(22) Anmeldetag: 23.01.2010
(51) Int. Cl.: F24D 11/00, F24D 19/10

(54) **Verfahren zum Betreiben einer Heizanlage sowie Heizanlage**
Method for operating a heater and heater
Procédé de fonctionnement d'une installation de chauffage et installation de chauffage

(30) Priorität: 13.02.2009 DE 102009008962
(43) Veröffentlichungstag der Anmeldung: 18.08.2010
(73) Patentinhaber: Honeywell Technologies Sarl, 1180 Rolle (CH)
(72) Erfinder: Guenter, Thomas, 72175 Dornhan (DE)
(74) Vertreter: Sturm, Christoph

(56) Entgegenhaltungen:
- AT-B- 400 629
- DE-A1- 2 712 733
- FR-A1- 2 477 685

## Beschreibung

Die Erfindung betrifft ein Verfahren zum Betreiben einer Heizanlage nach dem Oberbegriff des Anspruchs 1. Des Weiteren betrifft die Erfindung eine Heizanlage nach dem Oberbegriff des Anspruchs 11.

Aus der Praxis bekannte Heizanlagen, die zum Beispiel in Einfamilienhäusern zum Einsatz kommen, verfügen über einen Brenner, über den Heizmedium für mindestens zwei Brennerkreisläufe temperiert werden kann. So dient der Brenner von aus der Praxis bekannten Heizanlagen einerseits der Temperierung von Heizmedium für einen ersten Brennerkreislauf, über den Heizkörper erwärmt werden können, und andererseits der Temperierung von Heizmedium für einen zweiten Brennerkreislauf, über den in einem Wasserspeicher gespeichertes Wasser erwärmt werden kann. Dann, wenn eine Wärmeanforderung der Heizkörper vorliegt, wird Heizmedium durch den ersten Brennerkreislauf gefördert und vom Brenner erwärmt. Dann, wenn eine Wärmeanforderung des Warmwasserspeichers vorliegt, wird Heizmedium durch den zweiten Brennerkreislauf gefördert und ebenfalls vom Brenner erwärmt.

Aus der Praxis ist es weiterhin bereits bekannt, dass Heizanlagen zusätzlich zu einem Brenner mit den beiden Brennerkreisläufen ein Solarsystem aufweisen kann, über welches Heizmedium für einen Solarkreislauf temperierbar ist. Über den Solarkreislauf kann das in dem Wasserspeicher gespeicherte Wasser zusätzlich oder alternativ zum zweiten Brennerkreislauf erwärmt werden. Hierdurch ist es möglich, Solarenergie zur Erwärmung des im Wasserspeicher gespeicherten Wassers zu nutzen.

Bislang ist es nicht möglich, bei solchen Heizanlagen, die über ausschließlich einen Wasserspeicher verfügen, in welchem erwärmtes Wasser zur Entnahme durch einen Verbraucher bereitgehalten wird, Solarenergie einer weiteren Verwendung zuzuführen und so weitere Energieeinsparungen zu ermöglichen. Dies ist von Nachteil, da hierdurch der Wirkungsgrad von Heizanlagen beschränkt wird.

Die DE 27 12 733 A1 offenbart eine Vorrichtung nach dem Oberbegriff des Anspruchs 11 und ein Verfahren nach dem Oberbegriff des Anspruchs 1 zum Betreiben einer Heizanlage, wobei die Heizanlage einen Brenner aufweist, über den Heizmedium für mindestens zwei Brennerkreisläufe temperierbar ist, nämlich einerseits für einen ersten Brennerkreislauf zur Erwärmung von Heizkörpern (und andererseits für einen zweiten Brennerkreislauf zur Erwärmung von in einem Wasserspeicher gespeichertem Wasser. Die Heizanlage weist ein Solarsystem auf, über welches Heizmedium für einen Solarkreislauf temperierbar ist, um das in dem Wasserspeicher gespeicherte Wasser zusätzlich oder alternativ zum zweiten Brennerkreislauf über den Solarkreislauf zu erwärmen. Die Heizanlage wird abhängig von einer Temperatur des in dem Wasserspeicher gespeicherten Wassers betrieben.

Der Erfindung liegt die Aufgabe zu Grunde, ein neuartiges Verfahren zum Betreiben einer Heizanlage sowie eine neuartige Heizanlage zu schaffen, welche Energieeinsparungen ermöglichen.

Diese Aufgabe wird durch ein Verfahren zum Betreiben einer Heizanlage mit den Merkmalen des Anspruchs 1 gelöst.

Mithilfe der hier vorliegenden Erfindung ist es möglich, Solarenergie bei Heizanlagen mit ausschließlich einem Wasserspeicher in größerem Umfang zu nutzen. So ermöglicht es die hier vorliegende Erfindung, die im Wasserspeicher in Form des erwärmten Wassers gespeicherte thermische Energie vom Wasserspeicher auf die Brennerkreisläufe zu übertragen, sodass dann über das Solarsystem unter Zwischenschaltung des Wasserspeichers auch das Heizmedium der beiden Brennerkreisläufe temperiert werden kann.

Hierdurch ist es möglich, den Brenner der Heizanlage weniger stark zu nutzen, wodurch Energieeinsparungen im Bereich des Brenners möglich sind.

Nach einer vorteilhaften Weiterbildung der Erfindung wird dann, wenn bei der Erwärmung des Heizmediums der beiden Brennerkreisläufe über das im Wasserspeicher gespeicherte Wasser eine Temperatur des im Wasserspeicher gespeicherten Wassers eine zweite Grenztemperatur, die kleiner als die erste Grenztemperatur ist, erreicht oder unterschreitet, die Heizanlage so betrieben, dass über das im Wasserspeicher gespeicherte Wasser das Heizmedium der beiden Brennerkreisläufe nicht weiter erwärmt wird, wozu die Fördereinrichtung des zweiten Brennerkreislaufs ausgeschaltet ist.

Die erfindungsgemäße Heizanlage ist in Anspruch 11 definiert.

Bevorzugte Weiterbildungen der Erfindung ergeben sich aus den Unteransprüchen und der nachfolgenden Beschreibung.

Nachfolgend werden Ausführungsbeispiele der Erfindung, ohne hierauf beschränkt zu sein, anhand der Zeichnung näher erläutert. In der Zeichnung zeigt:
- Fig. 1:: eine schematisierte Darstellung einer Heizanlage;
- Fig. 2:: eine schematisierte Darstellung zur Verdeutlichung einer ersten Betriebsart der Heizanlage gemäß Fig. 1; und
- Fig. 3:: eine schematisierte Darstellung zur Verdeutlichung einer zweiten Betriebsart der Heizanlage gemäß Fig. 1.

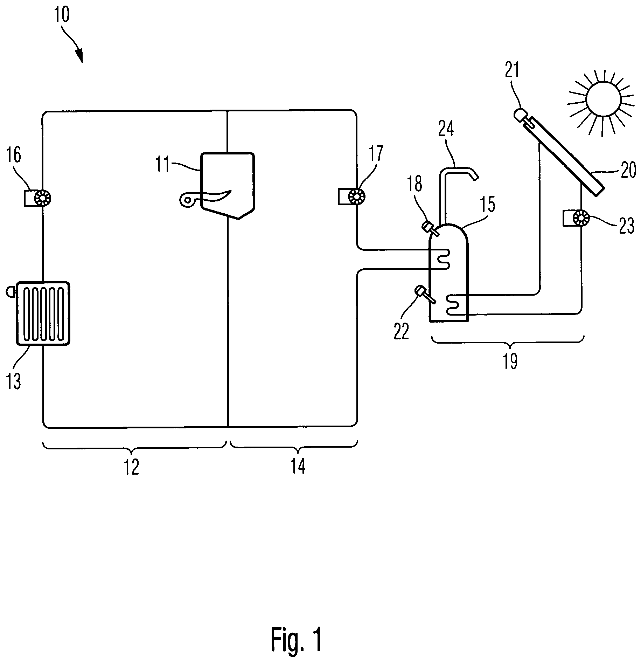

Fig. 1 zeigt eine stark schematisierte Darstellung einer Heizanlage 10, die im Sinne des erfindungsgemäßen Verfahrens betrieben werden soll. Die Heizanlage 10 der Fig. 1 umfasst einen Brenner 11, über den Heizmedium für zwei Brennerkreisläufe temperierbar ist, nämlich einerseits für einen ersten Brennerkreislauf 12 zur Erwärmung von Heizkörpern 13 und andererseits für einen zweiten Brennerkreislauf 14 zur Erwärmung von in einem Wasserspeicher 15 gespeichertem Wasser.

Dann, wenn eine Wärmeanforderung der Heizkörper 13 vorliegt, ist eine dem ersten Brennerkreislauf 12 zugeordnete Fördereinrichtung 16 eingeschaltet, sodass Heizmedium durch den ersten Brennerkreislauf 12 gefördert und bei eingeschaltetem Brenner 11, der zum Beispiel als Gasbrenner oder als Ölbrenner ausgebildet sein kann, vom Brenner 11 temperiert bzw. erhitzt wird. Liegt keine Wärmeanforderung der Heizkörper 13 vor, so ist die dem ersten Brennerkreislauf 12 zugeordnete Fördereinrichtung 16 ausgeschaltet.

Liegt eine Wärmeanforderung des Wasserspeichers 15 vor, um das im Wasserspeicher 15 gespeicherte Wasser stärker zu erwärmen, so ist eine dem zweiten Brennerkreislauf 14 zugeordnete Fördereinrichtung 17 eingeschaltet, um so Heizmedium durch den zweiten Brennerkreislauf 17 zu fördern und bei eingeschaltetem Brenner 11 durch denselben zu temperieren bzw. zu erhitzen.

Hierzu wird eine Wassertemperatur des im Wasserspeicher 15 gespeicherten Wassers messtechnisch erfasst, wobei dann, wenn die Temperatur des im Wasserspeicher 15 gespeicherten Wassers kleiner als ein Grenzwert ist, die Fördereinrichtung 17 des zweiten Brennerkreislaufs 14 sowie der Brenner 11 eingeschaltet ist, um so das im Wasserspeicher 15 gespeicherte Wasser über den zweiten Brennerkreislauf 14 zu erwärmen. Diese Temperatur des Wassers wird mithilfe eines ersten, oberen Temperatursensors 18 des Wasserspeichers 15 gemessen, der einem im Wasserspeicher verlaufenden Rohrleitungsabschnitt des zweiten Brennerkreislaufs 14 zugeordnet ist.

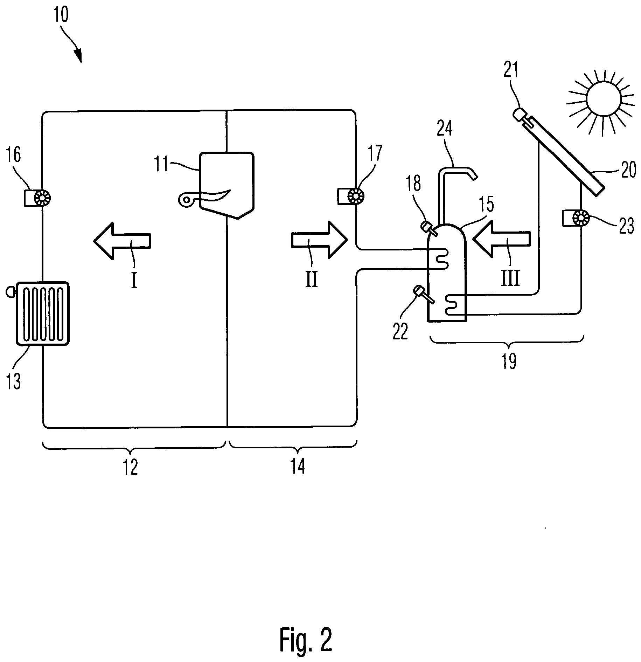

Die Erwärmung bzw. Temperierung des Heizmediums des ersten Brennerkreislaufs 12 bei eingeschaltetem Brenner 11 bedingt durch eine Wärmeanforderung der Heizkörper 13 ist in Fig. 2 durch einen Pfeil I und die Erwärmung bzw. Temperierung des Heizmediums des zweiten Brennerkreislaufs 14 bei eingeschaltetem Brenner 11 bedingt durch eine Wärmeanforderung des Wasserspeichers 15 ist in Fig. 2 durch einen Pfeil II visualisiert.

Zusätzlich zum Brenner 11 mit den beiden Brennerkreisläufen 12 und 14 verfügt die Heizanlage 10 der Fig. 1 weiterhin über einen Solarkreislauf 19 eines Solarsystems, wobei mithilfe des Solarsystems Heizmedium des Solarkreislaufs 19 temperierbar ist, um so zusätzlich oder alternativ zum zweiten Brennerkreislauf 14 über den Solarkreislauf 19 das im Wasserspeicher 15 gespeicherte Wasser zu erwärmen.

Die Erwärmung des im Wasserspeicher 15 gespeicherten Wassers über den Solarkreislauf 19 erfolgt dann, wenn eine Differenz zwischen einer Temperatur des Heizmediums des Solarkreislaufs, die im Bereich eines Solarkollektors 20 mithilfe eines dem Solarkollektors 20 zugeordneten Temperatursensors 21 gemessen wird, und einer Temperatur des Wassers im Wasserspeicher 15, die mit einem dem im Wasserspeicher verlaufenden Rohrleitungsabschnitt des Solarkreislaufs 19 zugeordneten zweiten, unteren Temperatursensor 22 des Wasserspeichers 15 gemessen wird, größer als ein Grenzwert ist. In diesem Fall ist dann eine dem Solarkreislauf 19 zugeordnete Fördereinrichtung 23 eingeschaltet, um das im Wasserspeicher 15 gespeicherte Wasser über den Solarkreislauf 19 zu erwärmen.

Die Erwärmung des im Wasserspeicher 15 gespeicherten Wassers über den Solarkreislauf 19 ist in Fig. 2 durch einen Pfeil III visualisiert.

Das im Wasserspeicher 15 gespeicherte, erwärmte Wasser kann aus dem Wasserspeicher 15 entnommen und einem Verbraucher 24 zugeführt werden.

Die Heizanlage 10 der Fig. 1 umfasst demnach einen einzigen Wasserspeicher 15 zur Speicherung von erwärmtem Wasser, wobei das im Wasserspeicher 15 gespeicherte Wasser über den Brenner 11 und den zweiten Brennerkreislauf 14 und/oder über den Solarkreislauf 19 erhitzt bzw. erwärmt werden kann. Das in dem einzigen Wasserspeicher 15 gespeicherte, erwärmte Wasser ist Verbrauchern 24, so zum Beispiel einer Dusche, zuführbar.

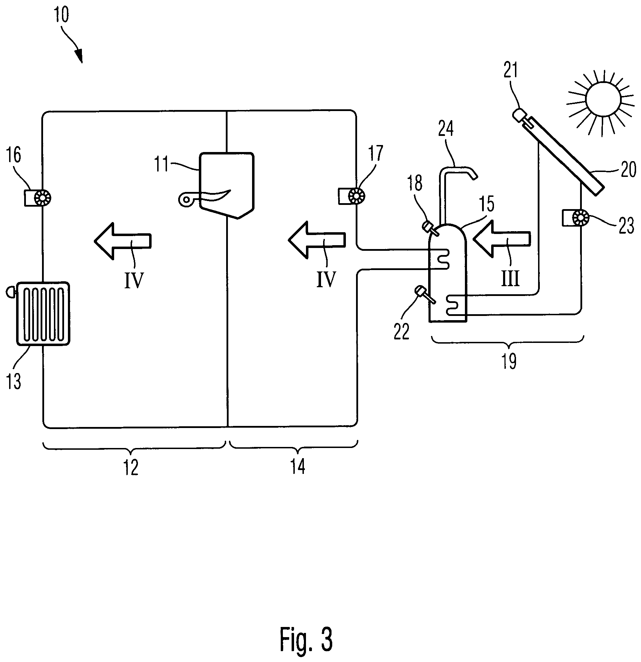

Im Sinne der hier vorliegenden Erfindung wird die in Fig. 1 gezeigt Heizanlage 10 so betrieben, dass dann, wenn eine Temperatur des im Wasserspeicher 15 gespeicherten Wassers eine erste Grenztemperatur erreicht oder überschreitet, über das im Wasserspeicher 15 gespeicherte, erwärmte Wasser das Heizmedium der Brennerkreisläufe 12 und 14 erwärmt wird. In diesem Fall wird dann thermische Energie, die im erwärmten und im Wasserspeicher 15 gespeicherten Wasser gespeichert ist, vom Wasserspeicher 15 im Sinne der Pfeile IV der Fig. 3 vom Wasserspeicher 15 in den zweiten Brennerkreislauf 14 und von dort in den ersten Brennerkreislauf 12 übertragen. Hierbei ist dann der Brenner 11 vorzugsweise ausgeschaltet und beide Fördereinrichtungen 16 und 17 beider Brennerkreisläufe 12 und 14 sind eingeschaltet.

Es ist auch möglich, dass der Brenner 11 mit geringer Leistung betrieben wird. Es ist jedoch aus energetischen Gründen bevorzugt, den Brenner 11 in diesem Fall komplett auszuschalten.

Dann, wenn demnach die Temperatur des im Wasserspeicher 15 gespeicherten Wassers die erste Grenztemperatur erreicht oder überschreitet, kann Solarenergie dazu genutzt werden, um auch Heizmedium der beiden Brennerkreisläufe 12 und 14 zu erwärmen.

Nach einer vorteilhaften Weiterbildung der Erfindung erfolgt das Erwärmen des Heizmediums der Brennerkreisläufe 12 und 14 über das im Wasserspeicher 15 gespeicherte, erwärmte Wasser bei Erreichen oder Überschreiten der ersten Grenztemperatur nur dann, wenn zusätzlich die Temperatur des Heizmediums des Solarkreislaufs 19 insbesondere im Bereich eines Solarkollektors 20, die mithilfe des dem Solarkollektor 20 zugeordneten Temperatursensors 21 erfasst wird, eine definierte Grenztemperatur erreicht oder überschreitet. So kann sichergestellt werden, dass das Erwärmen des Heizmediums der Brennerkreisläufe 12 und 14 über das im Wasserspeicher 15 gespeicherte, erwärmte Wasser nur dann erfolgt, wenn über den Solarkreislauf 19 das im Wasserspeicher 15 gespeicherte Wasser grundsätzlich erhitzt werden kann.

Mit der hier vorliegenden Erfindung ist es erstmals möglich, bei der in Fig. 1 bis 3 gezeigten Heizanlage 10 mit einem einzigen Wasserspeicher thermische Energie nicht nur zur Erwärmung des im Wasserspeicher 15 gespeicherten Wassers einzusetzen, sondern vielmehr über den Wasserspeicher 15 in die Brennerkreisläufe 12 und 14 einzutragen.

Bei der Temperatur des im Wasserspeicher 15 gespeicherten Wassers, die mit der ersten Grenztemperatur verglichen wird, handelt es sich um die Temperatur, die mit dem zweiten, unteren Temperatursensor 22, der dem im Wasserspeicher verlaufenden Rohrleitungsabschnitts des Solarkreislaufs 19 zugeordnet ist, gemessen wird. Dann, wenn bei der Erwärmung des Heizmediums der Temperaturkreisläufe 12 und 14 über das im Wasserspeicher 15 gespeicherte Wasser im Sinne der Pfeile IV eine Temperatur des im Wasserspeicher 15 gespeicherten Wassers eine zweite Grenztemperatur, die kleiner als die erste Grenztemperatur ist, erreicht oder unterschreitet, wird die Heizanlage 10 so betrieben, dass über das im Wasserspeicher 15 gespeicherte Wasser das Heizmedium der Brennerkreisläufe 12 und 14 nicht weiter erwärmt wird, wozu dann die dem zweiten Brennerkreislauf 14 zugeordnete Fördereinrichtung 17 ausgeschaltet ist.

Bei der Temperatur des im Wasserspeicher 15 gespeicherten Wassers, die mit der zweiten Grenztemperatur verglichen wird, handelt es sich um eine mit dem ersten, oberen Temperatursensor 18 erfasste Temperatur des Wassers, wobei der erste Temperatursensor 18 dem im Wasserspeicher 15 verlaufenden Rohrleitungsabschnitt des zweiten Brennerkreislaufs 14 zugeordnet ist. In dem Fall, in welchem bei Erwärmung des Heizmediums der beiden Brennerkreisläufe 12, 14 über das im Wasserspeicher 15 gespeicherte Wasser die Temperatur des im Wasserspeicher 15 gespeicherten Wassers die zweite Grenztemperatur erreicht oder unterschreitet, wird bei einer Wärmeanforderung durch die Heizkörper 13 die Heizanlage so betrieben, dass der Brenner 11 eingeschaltet ist, die Fördereinrichtung 16 des ersten Brennerkreislaufs 12 eingeschaltet und die Fördereinrichtung 17 des zweiten Brennerkreislaufs 14 ausgeschaltet ist.

Dann, wenn die Temperatur des im Wasserspeicher 15 gespeicherten Wassers eine dritte Grenztemperatur, die kleiner als die zweite Grenztemperatur ist, erreicht oder unterschreitet, wird die Heizanlage 10 so betrieben, dass das im Wasserspeicher 15 gespeicherte Wasser über den zweiten Brennerkreislauf 14 im Sinne des Pfeils II und/oder über den Solarkreislauf 19 im Sinne des Pfeils III erwärmt wird.

Bei der Temperatur des im Wasserspeicher 15 gespeicherten Wassers, die mit der dritten Grenztemperatur verglichen wird, handelt es sich wiederum um eine Temperatur, die mit dem ersten, oberen Temperatursensor 18, der einem Rohrabschnitt des Brennerkreislaufs 17 zugeordnet ist, gemessen wird.

Zur Erwärmung des im Wasserspeicher 15 gespeicherten Wassers über den zweiten Brennerkreislauf 14 ist der Brenner 11 eingeschaltet, weiterhin ist die dem zweiten Brennerkreislauf 14 zugeordnete Fördereinrichtung 17 eingeschaltet. Zur Erwärmung des im Wasserspeicher 15 gespeicherten Wassers über den Solarkreislauf 19 ist die Fördereinrichtung 23 des Solarkreislauf 19 eingeschaltet, wobei die dem Solarkreislauf 19 zugeordnete Fördereinrichtung 19 nur dann eingeschaltet ist, wenn die Differenz zwischen der im Bereich des Solarkollektors 20 gemessenen Temperatur des Heizmediums des Solarkreislaufs und der gemessenen Temperatur des im Wasserspeicher gespeicherten Wassers größer als ein Grenzwert ist.

Bei dieser Differenzbildung wird die mit dem zweiten, unteren Temperatursensor 22 gemessene Temperatur des im Wasserspeicher 15 gespeicherten Wassers verwendet, wobei der untere, zweite Temperatursensor 22 benachbart zu dem im Wasserspeicher 15 verlaufenden Rohrleitungsabschnitt des Solarkreislauf 19 positioniert ist.

Dann, wenn die mithilfe des unteren, zweiten Temperatursensors 22 gemessene Temperatur des im Wasserspeicher 15 gespeicherten Wassers die erste Grenztemperatur erreicht oder überschreitet und demnach die Heizanlage so betrieben wird, dass im Sinne der Pfeile IV mithilfe des im Wasserspeicher 15 gespeicherten Wassers das Heizmedium der Brennerkreisläufe 14 und 12 erwärmt wird, ist es möglich, unter Ausnutzung der Solarenergie über den Solarkreislauf 19 im Sinne des Pfeils III das im Wasserspeicher 15 gespeicherte Wasser weiter zu erhitzen.

Dies wird jedoch nur dann durchgeführt, wenn die Differenz zwischen der mithilfe des Temperatursensors 21 gemessenen Temperatur des Heizmediums im Bereich des Solarkollektors 20 und der mithilfe des unteren Temperatursensors 22 gemessenen Temperatur des im Wasserspeicher 15 gespeicherten Wassers größer als ein vorgegebener Grenzwert ist.

Mit der hier vorliegenden Erfindung wird erstmals vorgeschlagen, bei Heizanlagen, die über ausschließlich einen Wasserspeicher 15 verfügen, in welchem erwärmtes Wasser für Verbraucher 24 bereitgehalten wird, Solarenergie nicht nur zur Erwärmung des im Wasserspeicher 15 gespeicherten Wassers zu verwenden, sondern vielmehr dann, wenn die Temperatur des im Wasserspeicher 15 gespeicherten Wassers einen definierten Grenzwert überschreitet, über die im Wasserspeicher 15 gespeicherte thermische Energie auch das Heizmedium der Brennerkreisläufe 12 und 14 erwärmen. Hierdurch kann Solarenergie in größerem Umfang genutzt werden, sodass der Brenner 11 länger ausgeschaltet bleiben kann. Hierdurch können Energieeinsparungen im Bereich des Brenners 11 realisiert werden. Die Heizanlage 10 verfügt hiezu über eine nicht gezeigte Steuerungseinrichtung, die dem Betrieb der Heizanlage min Sinne der Erfindung steuert und/oder regelt, wobei der Steuerungseinrichtung als Eingangsgrößen Messsignale der Temperatursensoren 18, 21 und 22 zugeführt werden, und wobei die Steuerungseinrichtung als Ausgangsgrößen Stellsignale für den Brenner 11 und die Fördereinrichtungen 16, 17 und 23 ausgibt.

### Bezugszeichenliste

- 10: Heizanlage
- 11: Brenner
- 12: Brennerkreislauf
- 13: Heizkörper
- 14: Brennerkreislauf
- 15: Wasserspeicher
- 16: Fördereinrichtung
- 17: Fördereinrichtung
- 18: Temperatursensor
- 19: Solarkreislauf
- 20: Solarkollektor
- 21: Temperatursensor
- 22: Temperatursensor
- 23: Fördereinrichtung
- 24: Verbraucher

## Patentansprüche

1. Verfahren zum Betreiben einer Heizanlage (10), wobei die Heizanlage (10) einen Brenner (11), mindestens zwei Brennerkreisläufe (12,14) und einen Wasserspeicher (15) aufweist, wobei über den Brenner Heizmedium für die mindestens zwei Brennerkreisläufe (12, 14) temperierbar ist, nämlich einerseits für den ersten Brennerkreislauf (12) zur Erwärmung von Heizkörpern (13) und andererseits für den zweiten Brennerkreislauf (14) zur Erwärmung von in dem Wasserspeicher (15) gespeichertem Wasser, und wobei die Heizanlage (10) weiterhin ein Solarsystem mit einem Solarkreislauf (19) und einen Solarkollektor (20) aufweist, über welches Heizmedium für den Solarkreislauf (19) temperierbar ist, um das in dem Wasserspeicher (15) gespeicherte Wasser zusätzlich oder alternativ zum zweiten Brennerkreislauf (14) über den Solarkreislauf (19) zu erwärmen, **dadurch gekennzeichnet, dass** dann, wenn eine Temperatur des in dem Wasserspeicher (15) gespeicherten Wassers eine erste Grenztemperatur erreicht oder überschreitet und zusätzlich eine Temperatur des Heizmediums für den Solarkreislauf (19) im Bereich des Sonnenkollektors (20), die mithilfe eines dem Solarkollektor (20) zugeordneten Temperatursensors (21) erfasst wird, eine definierte Grenztemperatur erreicht oder überschreitet, die Heizanlage (10) so betrieben wird, dass über das im Wasserspeicher (15) gespeicherte Wasser das Heizmedium der beiden Brennerkreisläufe (12, 14) erwärmt wird, wozu Fördereinrichtungen (16, 17) der beiden Brennerkreisläufe (12, 14) eingeschaltet sind und der Brenner (11) vorzugsweise ausgeschaltet ist.

2. Verfahren nach Anspruch 1, **dadurch gekennzeichnet, dass** dann, wenn bei der Erwärmung des Heizmediums der beiden Brennerkreisläufe (12, 14) über das im Wasserspeicher gespeicherte Wasser eine Temperatur des im Wasserspeicher (15) gespeicherten Wassers eine zweite Grenztemperatur, die kleiner als die erste Grenztemperatur ist, erreicht oder unterschreitet, die Heizanlage (10) so betrieben wird, dass über das im Wasserspeicher (15) gespeicherte Wasser das Heizmedium der beiden Brennerkreisläufe (12, 14) nicht weiter erwärmt wird, wozu die Fördereinrichtung (17) des zweiten Brennerkreislaufs (14) ausgeschaltet ist.

3. Verfahren nach Anspruch 2, **dadurch gekennzeichnet, dass** dann, wenn bei der Erwärmung des Heizmediums der beiden Brennerkreisläufe (12, 14) über das im Wasserspeicher (15) gespeicherte Wasser eine Temperatur des im Wasserspeicher gespeicherten Wassers eine zweite Grenztemperatur, die kleiner als die erste Grenztemperatur ist, erreicht oder unterschreitet, die Heizanlage (10) so betrieben wird, dass der Brenner (11) und die Fördereinrichtung (16) des ersten Brennerkreislaufs (12) eingeschaltet ist.

4. Verfahren nach Anspruch 2 oder 3, **dadurch gekennzeichnet, dass** dann, wenn die Temperatur des im Wasserspeicher (15) gespeicherten Wassers eine dritte Grenztemperatur, die kleiner als die zweite Grenztemperatur ist, erreicht oder unterschreitet, die Heizanlage (10) so betrieben wird, dass das in dem Wasserspeicher (15) gespeicherte Wasser über den zweiten Brennerkreislauf (14) erwärmt wird.

5. Verfahren nach Anspruch 4, **dadurch gekennzeichnet, dass** hierzu der Brenner (11) und die Fördereinrichtung (17) des zweiten Brennerkreislaufs (14) eingeschaltet sind.

6. Verfahren nach einem oder mehreren der Ansprüche 1 bis 5, **dadurch gekennzeichnet, dass** das mindestens zwei Temperaturen des im Wasserspeicher (15) gespeicherten Wassers gemessen werden, nämlich eine erste, obere Temperatur benachbart zu einem Rohrleitungsabschnitt des zweiten Brennerkreislaufs und eine zweite, untere Temperatur benachbart zu einem Rohrleitungsabschnitt des Solarkreislaufs (19), wobei mit der ersten Grenztemperatur ein Messwert der zweiten, unteren Temperatur des im Wasserspeicher (15) gespeicherten Wassers verglichen wird.

7. Verfahren nach Anspruch 6, **dadurch gekennzeichnet, dass** mit der zweiten Grenztemperatur ein Messwert der ersten, oberen Temperatur des im Wasserspeicher (15) gespeicherten Wassers verglichen wird.

8. Verfahren nach Anspruch 6 oder 7, **dadurch gekennzeichnet, dass** mit der dritten Grenztemperatur ein Messwert der ersten, oberen Temperatur des im Wasserspeicher (15) gespeicherten Wassers verglichen wird.

9. Verfahren nach einem der Ansprüche 1 bis 8, **dadurch gekennzeichnet, dass** eine dem Solarkreislaufs (19) zugeordnete Fördereinrichtung (23) dann eingeschaltet wird, wenn eine Differenz zwischen einer im Bereich eines Solarkollektors (20) gemessenen Temperatur des Heizmediums des Solarkreislaufs (19) und einer gemessen Temperatur des im Wasserspeicher (15) gespeicherten Wassers größer als ein Grenzwert ist.

10. Verfahren nach Anspruch 9, **dadurch gekennzeichnet, dass** hierzu eine Differenz zwischen der im Bereich des Solarkollektors (20) gemessenen Temperatur des Heizmediums des Solarkreislaufs (19) und einem Messwert der zweiten, unteren Temperatur des im Wasserspeicher (15) gespeicherten Wassers gebildet wird.

11. Heizanlage, mit einen Brenner (11), mindestens zwei Brennerkreisläufe (12,14) und einen Wärmespeicher (15), wobei über den Brenner (11) Heizmedium für die mindestens zwei Brennerkreisläufe temperierbar ist, nämlich einerseits für den ersten Brennerkreislauf (12) zur Erwärmung von Heizkörpern (13) und andererseits für den zweiten Brennerkreislauf (14) zur Erwärmung von in einem Wasserspeicher (15) gespeichertem Wasser, und mit einem Solarsystem mit einem Solarkollektor (20), über welches Heizmedium für einen Solarkreislauf (19) temperierbar ist, um das in dem Wasserspeicher (15) gespeicherte Wasser zusätzlich oder alternativ zum zweiten Brennerkreislauf (14) über den Solarkreislauf (19) zu erwärmen, **gekennzeichnet durch** einen dem Wasserspeicher (15) zugeordneten Temperatursensors (18, 22) um die Temperatur des in dem Wasserspeicher (15) gespeicherten Wassers zu erfassen, und einen dem Solarkollektor (20) zugeordneten Temperatursensors (21), um die Temperatur des Heizmediums für den Solarkreislauf (19) im Bereich des Sonnenkollektors (20) zu erfassen, und durch eine Steuerungseinrichtung, welche die Heizanlage (10) im Sinne des Verfahrens nach einem oder mehreren der Ansprüche 1 bis 10 betreibt.

12. Heizanlage nach Anspruch 11, **gekennzeichnet durch** einen einzigen Wasserspeicher (15), wobei das in dem Wasserspeicher (15) gespeicherte Wasser in einer ersten Betriebsart der Heizanlage über den Solarkreislauf (19) und/oder den zweiten Brennerkreislauf (14) erwärmbar ist, und wobei das in dem Wasserspeicher (15) gespeicherte Wasser in einer zweiten Betriebsart der Heizanlage der Erwärmung des Heizmediums der beiden Brennerkreisläufe (12, 14) dient.

13. Heizanlage nach Anspruch 11 oder 12, **dadurch gekennzeichnet, dass** der Steuerungseinrichtung als Eingangsgrößen Messsignale der Temperatursensoren (18, 21, 22) zugeführt werden, wobei die Steuerungseinrichtung als Ausgangsgrößen Stellsignale für den Brenner (11) und die Fördereinrichtungen (16, 17, 23) ausgibt.

## Claims

1. Method for operating a heating system (10), the heating system (10) having a burner (11), at least two burner circuits (12, 14) and a water tank (15), it being possible for the temperature of a heating medium for the at least two burner circuits (12, 14) to be controlled via the burner, specifically on the one hand for the first burner circuit (12) for heating radiators (13) and on the other hand for the second burner circuit (14) for heating water stored in the water tank (15), and the heating system (10) also having a solar system with a solar circuit (19) and a solar collector (20), via which the temperature of heating medium for the solar circuit (19) can be controlled in order to heat the water stored in the water tank (15) via the solar circuit (19), additionally or alternatively to the second burner circuit (14), **characterized in that** when a temperature of the water stored in the water tank (15) reaches or exceeds a first limiting temperature and, in addition, a temperature of the heating medium for the solar circuit (19) in the region of the solar collector (20), which is measured by means of a temperature sensor (21) assigned to the solar collector (20), reaches or exceeds a defined limiting temperature, the heating system (10) is operated in such a way that the heating medium of the two burner circuits (12, 14) is heated via the water stored in the water tank (15), for which purpose conveying devices (16, 17) of the two burner circuits (12, 14) are switched on and the burner (11) is preferably switched off.

2. Method according to Claim 1, **characterized in that** when, during the heating of the heating medium of the two burner circuits (12, 14) via the water stored in the water tank, a temperature of the water stored in the water tank (15) reaches or falls below a second limiting temperature, which is lower than the first limiting temperature, the heating system (10) is operated in such a way that the heating medium of the two burner circuits (12, 14) is not heated further via the water stored in the water tank (15), for which purpose the conveying device (17) of the second burner circuit (14) is switched off.

3. Method according to Claim 2, **characterized in that** when, during the heating of the heating medium of the two burner circuits (12, 14) by the water stored in the water tank (15), a temperature of the water stored in the water tank reaches or falls below a second limiting temperature, which is lower than the first limiting temperature, the heating system (10) is operated in such a way that the burner (11) and the conveying device (16) of the first burner circuit (12) are switched on.

4. Method according to Claim 2 or 3, **characterized in that** when the temperature of the water stored in the water tank (15) reaches or falls below a third limiting temperature, which is lower than the second limiting temperature, the heating system (10) is operated in such a way that the water stored in the water tank (15) is heated via the second burner circuit (14).

5. Method according to Claim 4, **characterized in that** for this purpose the burner (11) and the conveying device (17) of the second burner circuit (14) are switched on.

6. Method according to one or more of Claims 1 to 5, **characterized in that** at least two temperatures of the water stored in the water tank (15) are measured, namely a first, upper temperature adjacent to a pipeline section of the second burner circuit, and a second, lower temperature adjacent to a pipeline section of the solar circuit (19), wherein a measured value of the second, lower temperature of the water stored in the water tank (15) is compared with the first limiting temperature.

7. Method according to Claim 6, **characterized in that** a measured value of the first, upper temperature of the water stored in the water tank (15) is compared with the second limiting temperature.

8. Method according to Claim 6 or 7, **characterized in that** a measured value of the first, upper temperature of the water stored in the water tank (15) is compared with the third limiting temperature.

9. Method according to one of Claims 1 to 8, **characterized in that** the conveying device (23) assigned to the solar circuit (19) is switched on when a difference between a temperature of the heating medium of the solar circuit (19), measured in the region of a solar collector (20), and a measured temperature of the water stored in the water tank (15) is greater than a limiting value.

10. Method according to Claim 9, **characterized in that** for this purpose, a difference is formed between the temperature of the heating medium of the solar circuit (19), measured in the region of the solar collector (20), and a measured value of the second, lower temperature of the water stored in the water tank (15).

11. Heating system, having a burner (11), at least two burner circuits (12, 14) and a water tank (15), it being possible for the temperature of a heating medium for the at least two burner circuits (12, 14) to be controlled via the burner, specifically on the one hand for the first burner circuit (12) for heating radiators (13) and on the other hand for the second burner circuit (14) for heating water stored in a water tank (15), and having a solar system with a solar collector (20), via which the temperature of heating medium for a solar circuit (19) can be controlled in order to heat the water stored in the water tank (15) via the solar circuit (19), additionally or alternatively to the second burner circuit (14), **characterized by** a temperature sensor (18, 22) assigned to the water tank (15) in order to measure the temperature of the water stored in the water tank (15), and a temperature sensor (21) assigned to the solar collector (20) in order to measure the temperature of the heating medium for the solar circuit (19) in the region of the solar collector (20), and by a control device, which operates the heating system (10) in the sense of the method according to one or more Claims 1 to 10.

12. Heating system according to Claim 11, **characterized by** a single water tank (15), wherein the water stored in the water tank (15) can be heated via the solar circuit (19) and/or the second burner circuit (14) in a first operating mode, and wherein the water stored in the water tank (15) is used to heat the heating medium of the two burner circuits (12, 14) in a second operating mode of the heating system.

13. Heating system according to Claim 11 or 12, **characterized in that** the control device is supplied with measured signals from the temperature sensors (18, 21, 22) as input variables, wherein the control device outputs actuating signals for the burner (11) and the conveying devices (16, 17, 23) as output variables.

## Revendications

1. Procédé de conduite d'une installation de chauffage (10), l'installation de chauffage (10) présentant un brûleur (11), au moins deux circuits de brûleur (12, 14) et une réserve d'eau (15), un fluide de chauffage des deux ou plusieurs circuits de brûleur (12, 14) pouvant être chauffé par l'intermédiaire du brûleur, à savoir d'une part pour le premier circuit de brûleur (12) qui sert à chauffer des corps de chauffe (13) et d'autre part pour le deuxième circuit de brûleur (14) qui sert à chauffer l'eau conservée dans la réserve d'eau (15), l'installation de chauffage (10) présentant en outre un système solaire doté d'un circuit solaire (19) et d'un collecteur solaire (20) et par lequel un fluide de chauffage du circuit solaire (19) peut être chauffé par l'intermédiaire du circuit solaire (19) pour chauffer l'eau conservée dans la réserve d'eau (15) en supplément ou en variante au deuxième circuit de brûleur (14), **caractérisé en ce que** si la température de l'eau conservée dans la réserve d'eau (15) atteint ou devient supérieure à une première température limite et si de plus la température du fluide de chauffage au niveau du collecteur solaire (20) du circuit solaire (19), saisie à l'aide d'un capteur de température (21) associé au collecteur solaire (20), atteint ou devient supérieure à une température limite définie, l'installation de chauffage (10) est conduite de telle sorte que le fluide de chauffage des deux circuits de brûleur (12, 14) est chauffé par l'intermédiaire de l'eau conservée dans la réserve d'eau (15) et dans ce but, des dispositifs de transport (16, 17) des deux circuits de brûleur (12, 14) sont branchés et le brûleur (11) est de préférence débranché.

2. Procédé selon la revendication 1, **caractérisé en ce que** si la température de l'eau conservée dans la réserve d'eau (15) atteint ou devient inférieure à une deuxième température limite plus petite que la première température limite lorsque le fluide de chauffage des deux circuits de brûleur (12, 14) est chauffé par l'intermédiaire de l'eau conservée dans la réserve d'eau, l'installation de chauffage (10) est conduite de telle sorte que le fluide de chauffage des deux circuits de brûleur (12, 14) n'est plus chauffé par l'intermédiaire de l'eau conservée dans la réserve d'eau (15), et dans ce but le dispositif de transport (17) du deuxième circuit de brûleur (14) est débranché.

3. Procédé selon la revendication 2, **caractérisé en ce que** si la température de l'eau conservée dans la réserve d'eau atteint ou devient inférieure à une deuxième température limite inférieure à la première température limite lorsque le fluide de chauffage des deux circuits de brûleur (12, 14) est chauffé par l'intermédiaire de l'eau conservée dans la réserve d'eau (15), l'installation de chauffage (10) est conduite de telle sorte que le brûleur (11) et le dispositif de transport (16) du premier circuit de brûleur (12) sont branchés.

4. Procédé selon les revendications 2 ou 3, **caractérisé en ce que** si la température de l'eau conservée dans la réserve d'eau (15) atteint ou devient inférieure à une troisième température limite inférieure à la deuxième température limite, l'installation de chauffage (10) est conduite de telle sorte que l'eau conservée dans la réserve d'eau (15) est chauffée par l'intermédiaire du deuxième circuit de brûleur (14).

5. Procédé selon la revendication 4, **caractérisé en ce que** dans ce but, le brûleur (11) et le dispositif de transport (17) du deuxième circuit de brûleur (14) sont branchés.

6. Procédé selon l'une ou plusieurs des revendications 1 à 5, **caractérisé en ce qu'**au moins deux températures de l'eau conservée dans la réserve d'eau (15) sont mesurées, à savoir une première température supérieure voisine d'une section de tube du deuxième circuit de brûleur et une deuxième température inférieure voisine d'une section de conduit du circuit solaire (19), une valeur de mesure de la deuxième température inférieure de l'eau conservée dans la réserve d'eau (15) étant comparée à la première température limite.

7. Procédé selon la revendication 6, **caractérisé en ce qu'**une valeur de mesure de la première température supérieure de l'eau conservée dans la réserve d'eau (15) est comparée à la deuxième température limite.

8. Procédé selon les revendications 6 ou 7, **caractérisé en ce qu'**une valeur de mesure de la première température supérieure de l'eau conservée dans la réserve d'eau (15) est comparée à la troisième température limite.

9. Procédé selon l'une des revendications 1 à 8, **caractérisé en ce qu'**un dispositif de transport (23) associé au circuit solaire (19) est branché lorsque la différence entre la température mesurée au niveau d'un collecteur solaire (20) du fluide de chauffage du circuit solaire (19) et la température mesurée sur l'eau conservée dans la réserve d'eau (15) est supérieure à une valeur limite.

10. Procédé selon la revendication 9, **caractérisé en ce que** dans ce but, la différence entre la température du fluide de chauffage du circuit solaire (19) mesurée au niveau du collecteur solaire (20) et la valeur de mesure de la deuxième température inférieure de l'eau conservée dans la réserve d'eau (15) est formée.

11. Installation de chauffage présentant un brûleur (11), au moins deux circuits de brûleur (12, 14) et une réserve d'eau (15), un fluide de chauffage des deux ou plusieurs circuits de brûleur (12, 14) pouvant être chauffé par l'intermédiaire du brûleur, à savoir d'une part pour le premier circuit de brûleur (12) qui sert à chauffer des corps de chauffe (13) et d'autre part pour le deuxième circuit de brûleur (14) qui sert à chauffer l'eau conservée dans la réserve d'eau (15), et un système solaire doté d'un circuit solaire (19) et d'un collecteur solaire (20) et par lequel un fluide de chauffage du circuit solaire (19) peut être chauffé par l'intermédiaire du circuit solaire (19) pour chauffer l'eau conservée dans la réserve d'eau (15) en supplément ou en variante au deuxième circuit de brûleur (14), **caractérisée par** un capteur de température (18, 22) associé à la réserve d'eau (15) et saisissant la température de l'eau conservée dans la réserve d'eau (15) et un capteur de température (21) associé au collecteur solaire (20) et saisissant la température du fluide de chauffage du circuit solaire (19) au niveau du collecteur solaire (20), et par un dispositif de commande qui conduit l'installation de chauffage (10) au sens du procédé selon l'une ou plusieurs des revendications 1 à 10.

12. Installation de chauffage selon la revendication 11, **caractérisée par** la présence d'une seule réserve d'eau (15), l'eau conservée dans la réserve d'eau (15) pouvant être chauffée dans un premier mode de fonctionnement de l'installation de chauffage par le circuit solaire (19) et/ou le deuxième circuit de brûleur (14), l'eau conservée dans la réserve d'eau (15) servant dans un deuxième mode de fonctionnement de l'installation de chauffage à chauffer le fluide de chauffage des deux circuits de brûleur (12, 14).

13. Installation de chauffage selon les revendications 11 ou 12, **caractérisée en ce que** le dispositif de commande reçoit comme grandeurs d'entrée des signaux de mesure des capteurs de température (18, 21, 22), le dispositif de commande délivrant comme grandeurs de sortie des signaux de réglage au brûleur (11) et aux dispositifs de transport (16, 17, 23).
